# EUROPÄISCHE PATENTSCHRIFT

(11) **EP 1 278 292 B1**
(45) Veröffentlichungstag und Bekanntmachung des Hinweises auf die Patenterteilung: **15.03.2006**
(21) Anmeldenummer: 02405616.0
(22) Anmeldetag: 18.07.2002
(51) Int. Cl.: H02K 15/095

(54) **Vorrichtung zum Wickeln eines mehrpoligen Stators**
Device for winding a stator having a plurality of poles
Dispositif pour bobiner un stator ayant une pluralité de pôles

(30) Priorität: 20.07.2001 EP 01810720
(43) Veröffentlichungstag der Anmeldung: 22.01.2003
(73) Patentinhaber: ATS Wickel- und Montagetechnik AG, 5436 Würenlos (CH)
(72) Erfinder: Walter, Patrice, 8105 Watt (CH); Eugster, Beat, 8113 Boppelsen (CH); Meier, Konrad, 8105 Watt (CH)
(74) Vertreter: Wiedmer, Edwin

(56) Entgegenhaltungen:
- PATENT ABSTRACTS OF JAPAN vol. 2002, no. 05, 3. Mai 2002 (2002-05-03) -& JP 2002 034211 A (BESUTEC:KK), 31. Januar 2002 (2002-01-31)
- PATENT ABSTRACTS OF JAPAN vol. 1998, no. 14, 31. Dezember 1998 (1998-12-31) -& JP 10 257724 A (NITTOKU ENG CO LTD), 25. September 1998 (1998-09-25)
- PATENT ABSTRACTS OF JAPAN vol. 1999, no. 03, 31. März 1999 (1999-03-31) -& JP 10 322983 A (SANKYO SEIKI MFG CO LTD), 4. Dezember 1998 (1998-12-04)
- PATENT ABSTRACTS OF JAPAN vol. 1998, no. 09, 31. Juli 1998 (1998-07-31) -& JP 10 112962 A (ARUTETSUKU KYOTO:KK), 28. April 1998 (1998-04-28)

## Beschreibung

Die Erfindung betrifft eine Vorrichtung zum Wickeln von Draht zu Feldspulen nach dem Oberbegriff von Anspruch 1.

Im Automobilbau ersetzen Elektronikmotoren in zunehmenden Masse die bis anhin bekannten Kollektormotoren. Von ihrer Bauart wird zwischen Innenläufer- und Aussenläufermotoren unterschieden. Der Blechschnitt des Stators eines Aussenläufermotors entspricht weitgehend dem Ankerblechschnitt eines Kollektormotors.

Wünschenswert bei einem Stator eines Aussenläufermotors ist das Aufbringen einer gleichmässig über den gesamten Wickelraum verteilten, möglichst lagenweisen Wicklung. Das Wickeln mit einem umlaufenden Wickelarm (Flyer) und entsprechenden Drahtleitformen bei stillstehendem Stator ergibt normalerweise keine brauchbare Drahtverlegung auf dem Polhom. Wegen fehlender Verteilung des Drahtes wird die Wicklung gehäuft an einer Stelle aufgebaut und die gewünschte Füllung kann nicht erreicht werden.

Eine Lösung des vorstehend erwähnten Problems ist aus der WO-A-9933157 bekannt. Die Polhörner werden dort einzeln auf klassischen Spulenwickelmaschinen mehr oder weniger lagenweise bewickelt und anschliessend in den Kem des Stators eingesetzt. Dieses Konzept hat jedoch den grossen Nachteil, dass die Stanzwerkzeuge für die einzelnen Blechschnitte sehr viel teurer sind als bei einem Gesamtblechschnitt Zudem müssen die Teile einzeln isoliert und die bewickelten Polhörner einzeln in den Stator eingesetzt werden, was einen zusätzlichen Zeitaufwand in der Fertigung bedeutet. Überdies ist an den Fügestellen der magnetische Fluss unterbrochen, d.h. die elektrische Leistung des Motors wird bei dieser Statorkonzeption reduziert.

Eine Vorrichtung der eingangs genannten Art ist in JP-A-2002 034211 und JP-A-10 257724, offenbart.

Der Erfindung liegt die Aufgabe zugrunde, bei einer vorrichtung der eingangs genannten Art, mit welcher bei einem Gesamtblechschnitt eine ausreichend gleichmässige Verteilung des Drahtes über die Länge des Polhornes erreicht wird, dafür zu sorgen, dass die Drahtleitstücke ungeachtet allfälliger äusserer Störeinflüsse exakt geführt werden können.

Zur erfindungsgemässen Lösung der Aufgabe führt eine Vorrichtung mit den Merkmalen von Anspruch 1.

Bei der erfindungsgemässen Vorrichtung ist der gegenseitige Abstand der Drahtleitstücke in Abhängigkeit von der Anzahl Wicklungen oder Wickellagen vorzugsweise programmgesteuert einstellbar.

Ein Programm benützt den Wicklungsfortschritt und damit den Aufbau der zu wickelnden Spule zur Steuerung des gegenseitigen Abstandes der Drahtleitstücke. Auf diese Weise wird es möglich, die Drahtleitstücke während des ganzen Wickelvorganges präzise in Kontakt mit oder in einem vorgegebenen minimalen Abstand zu der jeweils letzten Wickellage zu halten, so dass der Draht die Drahtleitstücke nicht unterlaufen kann. Die Einstellung der Drahtleitstücke entsprechend der jeweils aktuellen Spulendicke kann kontinuierlich in Abhängigkeit von der bereits gewickelten Drahtlänge oder schrittweise nach jeder gewickelten Lage erfolgen.

Bevorzugt sind die Drahtleitstücke zur Einstellung des gegenseitigen Abstandes senkrecht zur Drehachse des Wickelarmes an einem Führungselement gleitend verschiebbar.

Die Verschiebung der Steuerstange kann beispielsweise über einen Servomotor erfolgen, welcher mit einem der vorgegebenen und sich während des Wickelvorganges verändernden Einstellung des gegenseitigen Abstandes der Drahtleitstücke entsprechenden Programm gesteuert wird.

Zur Ausführung einer Drehbewegung des Stators in die gewünschte Wickelposition ist in der Rotationsachse des Stators bevorzugt ein Schaltapparat angeordnet.

Die erfindungsgemässe Vorrichtung eignet sind insbesondere zum Bewickeln eines Stators für einen Aussenläufermotor.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine teilweise geschnittene Seitenansicht einer zum Stand der Technik gehörenden Ausführungsform einer Wickelmaschine mit aufgespanntem Stator bei Wicklungsbeginn;
- Fig. 2 die bekannte Wickelmaschine von Fig. 1 bei Wickelende;
- Fig. 3 die Draufsicht auf einen Teil der bekannten Wickelmaschine mit von Fig. 1 mit aufgespanntem Stator;
- Fig. 4 eine teilweise geschnittene Seitenansicht erfindungsgemässen Ausführungsform einer Wickelmaschine.

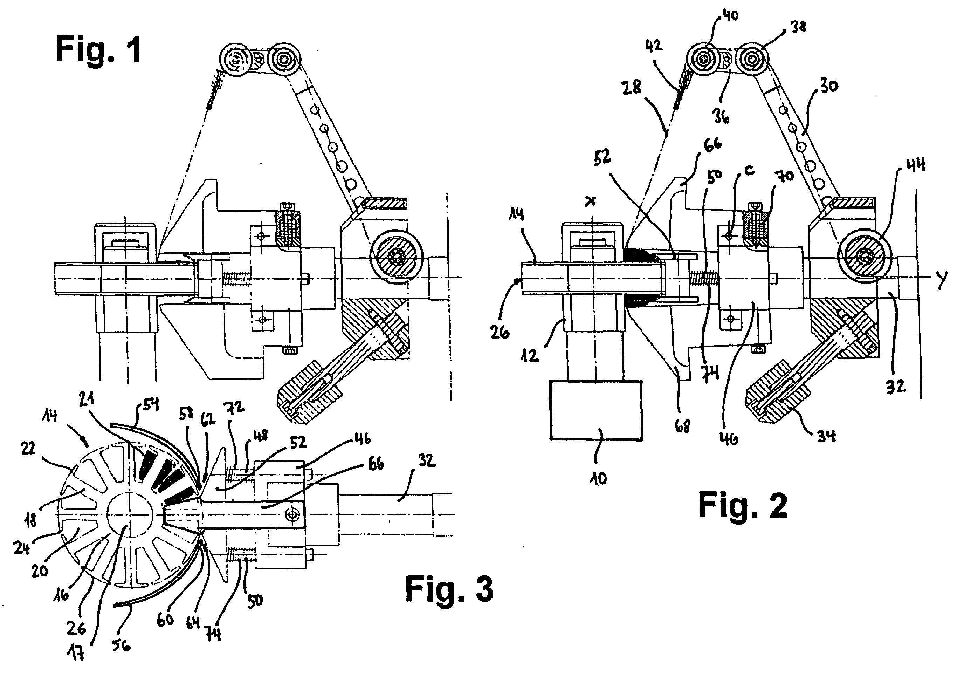

Eine in den Fig. 1 bis 3 dargestellte zum Stand der Technik gehörende Ausführungsform einer Wickelmaschine umfasst einen Schaltapparat 10 mit einem Spannwerkzeug 12 für einen Stator 14. Der Stator 14 ist um seine Rotationsachse x, die der Spannachse des Schaltapparates 10 entspricht, drehbar eingespannt.

Der in Fig. 3 näher wiedergegebene Stator 14 besteht im wesentlichen aus einem eine zentrale Bohrung 17 aufweisenden Körper 16 mit von diesem radial nach aussen abragenden Polhörnern 18, die Axialnuten 20 zur Aufnahme von Drahtwicklungen 21 bilden. Zwei bereits durchgeführte Wicklungen sind im Schnitt dargestellt.

Die einzelnen Polhörner 18 des Stators 14 weisen ein querschnittlich etwa T-förmiges freies Ende 22 auf. Die freien Enden 22 der Polhörner 18 bilden die durch Öffnungsschlitze 24 der Axialnuten 20 zur Drahteinführung unterbrochene äussere Oberfläche 26 des Stators 14. Der beispielhaft dargestellte 12-polige Stator 14 ist Teil eines Aussenläufer-Elektronikmotors. Der Stator 14 wird durch Stanzpaketieren von identischen Blechlamellen zu einem Blechpaket hergestellt.

Das Bewickeln jeweils eines Polhornes 18 des Stators 14 mit einem Draht 28 erfolgt über einen Wickelarm 30, der in einem spitzen Winkel zur Drehachse y auf einer Achswelle 32 einer in der Zeichnung nicht dargestellten Antriebseinheit angeordnet ist. Ein auf der dem Wickelarm 30 gegenüberliegenden Seite angeordnetes Gegengewicht 34 dient Zum Ausgleich einer Unwucht während der Rotation des Wickelarmes 30. Am freien Ende des Wickelarmes 30 sitzt ein mit diesem starr verbundener Drahtführer 36 mit zwei Umlenkrollen 38, 40 und einer Drahtführerdüse 42. Der Draht 28 aus Kupfer wird von einer in der Zeichnung nicht dargestellten Vorratsrolle abgewickelt, über eine erste Umlenkrolle 44 und weiter über die beiden Umlenkrollen 38, 40 des Drahtführers 36 und anschliessend durch die Drahtführerdüse 42 geführt. Die Achswelle 32 mit aufgesetztem Wickelarm 30 ist längs der Drehachse y hin und her verschiebbar.

Auf der Achswelle 32 ist zwischen dem Wickelarm 30 und dem Stator 14 eine Halterung 46 angeordnet. In dieser Halterung 46 sind zwei Führungsstifte 48, 50 einer Wickelform 52 gelagert. Die Wickelform 52 liegt dem Stator 14 im Bereich des T-förmigen freien Endes des zu bewickelnden Polhornes 18 an und bildet eine erste Einführungshilfe zum Einwickeln des Drahtes 28 durch die dem Polhorn 18 benachbarten Öffnungsschlitze 24. Eine zweite Einführungshilfe wird durch zwei Nutenabdeckbleche 54, 56 gebildet, deren freie Enden 58, 60 zusammen mit der Wickelform 52 zwei Einführungsschlitze 62, 64 zur Einführung des Drahtes 28 in die Offnungsschlitze 24 bilden.

In der Halterung 46 sind zwei einander gegenüberstehende, die Wickelform 52 übergreifende und zu dieser senkrecht stehende Drahtleitstücke 66, 68 um eine Schwenkachse c schwenkbar gelagert. Die Schwenkachse c liegt senkrecht zur Rotationsachse x des Stators 14 und senkrecht zur Drehachse y des Wickelarmes 30. Jedes der Drahtleitstücke 66, 68 ist über eine Feder 70 mit der Wickelform 52 federnd in Anschlag.

Die Drahtleitstücke 66, 68 dienen zur Erzeugung gleichmässiger Wickellagen. Hierzu werden bei der Bewicklung eines Polhornes 18 der Wickelarm 30 und die Drahtleitstücke 66, 68 in Richtung der Drehachse y des Wickelarmes auf der Achswelle 32 hin und her bewegt. Mit zunehmender Bewicklung des Polhornes 18 steigt die Anzahl der Wickellagen, und die Drahtleitstücke 66, 68 liegen der Drahtwicklung direkt federnd an, wie dies in Fig. 2 gezeigt ist. Die direkte Auflage der Drahtleitstücke 66, 68 auf der Drahtwicklung bei fortschreitendem Wickelvorgang führt zusammen mit der Hin- und Herbewegung des Wickelarmes 30 und der Drahtleitstücke 66, 68 zu einer gleichmässigen Drahtwicklung, da durch die federnde Auflage der Drahtleitstücke 66, 68 der Draht 28 diese nicht unterlaufen kann, wie dies bei der Anordnung feststehender Drahtleitstücke der Fall ist.

Die in der Halterung 46 gelagerten Führungsstifte 48, 50 der Wickelform 52 sind von zwei Rückstellfedem 72, 74 umfasst. Diese Rückstellfedem 72, 74 dienen der federnden Auflage der Wickelform 52 an der äusseren Oberfläche 26 des Stators 14 im Bereich des zu bewickelnden Polhornes 18.

Nach erfolgter Bewicklung eines Polhornes 18 erfolgt über den Schaltapparat 10 eine Drehung des Stators um seine Rotationsachse x zur Bewicklung des nächsten Polhornes 18.

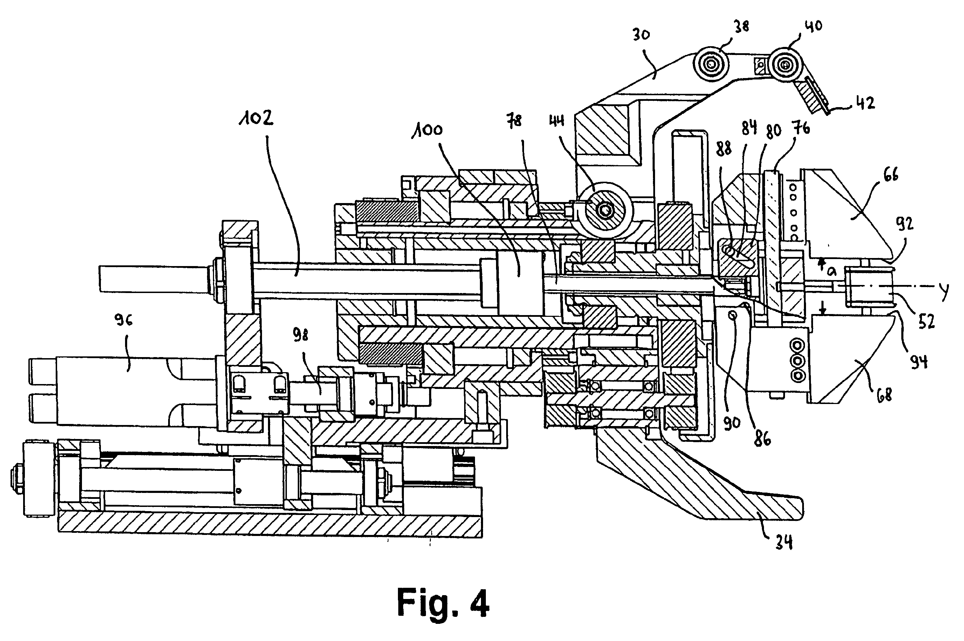

Bei einer in Fig. 4 dargestellten erfindungsgemässen Ausführungsform einer Wickelmaschine ist der gegenseitige Abstand a der Drahtleitstücke 66, 68 in Abhängigkeit von der Anzahl Wicklungen oder Wickellagen programmgesteuert einstellbar. Mit Ausnahme der nachfolgend erläuterten Anordnung der Drahtleitstücke 66, 68 und der zu ihrer automatischen Einstellung erforderlichen Steuerungselemente umfasst jedoch die zweite Ausführungsform im wesentlichen die gleichen Maschinenelemente wie die in den Fig. 1 bis 3 gezeigte erste Ausführungsform mit den gefederten Drahtleitstücken. Einander entsprechende Teile der beiden Ausführungsformen sind deshalb mit gleichen Bezugszeichen versehen.

Die Drahtleitstücke 66, 68 sind an einer senkrecht zur Drehachse y der Wickelarme 30 angeordneten Führungsstange 76 gleitend verschiebbar gelagert. An einer zentral in der Drehachse y liegenden und in Richtung der Drehachse y hin und her verschiebbaren Steuerstange 78 sind zwei Steuerkulissen 80, 82 mit in einem Winkel von etwa 30° gegen die Drahtleitstücke 66, 68 hin aufeinander zulaufenden Steuerschlitzen 84, 86 befestigt. In die Steuerschlitze 84, 86 ragen an den Drahtleitstücken 66,68 festgelegte Steuemocken 88, 90 ein. Je nach Verschiebungsrichtung der Steuerstange 78 entlang der Drehachse y bewegen sich die beiden Drahtleitstücke 66, 68 mit ihren einander parallel gegenüberliegenden Auflageflächen 92, 94 aufeinander zu bzw. voneinander weg. Hierbei verändert sich der Abstand a zwischen den Auflageflächen 92, 94 entsprechend der Verschiebung der Steuerstange 78.

Die Steuerstange 78, welche nicht drehbar ist, steht über eine drehbar gelagerte Kupplung 100 mit einer drehbaren, die Rotation des Wickelarmes 30 bewirkenden Wickelwelle 102 in Verbindung, d. h. die Steuerstange 78 wird durch die Wickelwelle 102 nach rückwärts verlängert.

Die Einstellung des gewünschten Abstandes a zwischen den Auflageflächen 92, 94 der Drahtleitstücke 66, 68 erfolgt in dem in Fig. 4 gezeigten Ausführungsbeispiel mittels eines programmgesteuerten Servomotors 96, welcher über eine Gewindespindelanordnung 98 die Verschiebung der Wickelstange 102 und damit der Steuerstange 78 in der Drehachsenrichtung y bewirkt.

## Patentansprüche

1. Vorrichtung zum Wickeln von Draht (28) zu Feldspulen um Polhörner (18) eines mehrpoligen rotationssymmetrischen Stators (14) einer elektrischen Maschine, wobei die radial nach aussen abragenden, etwa T-förmig ausgebildeten Polhörner (18) Axialnuten (20) mit Öffnungsschlitzen (24) zur Einführung des Drahtes (28) in die Axialnuten (20) begrenzen, mit einem um eine senkrecht zur Rotationsachse (x) des Stators (14) liegende Drehachse (y) drehbaren Wickelarm (30) zum Wickeln des Drahtes (28) um jeweils ein Polhorn (18), und mit Drahtleitelementen (52, 54, 56) als Einführungshilfen für den Draht (28) in die dem zu umwickelnden Polhorn (18) benachbarten Öffnungsschlitze (24), wobei zur gleichmässigen Verteilung des Drahtes (28) über die Länge des Polhornes (18) zwei einander gegenüberstehende, das zu bewickelnde Polhorn (18) beidseitig übergreifbare und gemeinsam mit dem Wickelarm (30) in Richtung der Drehachse (y) hin und her verschiebbare Drahtleitstücke (66, 68) angeordnet sind und der gegenseitige Abstand (a) der Drahtleitstücke (66, 68) zur Anpassung an die sich während des Wickelvorganges verändernde Dicke der Wicklung über eine in der Drehachse (y) hin und her verschiebbare Steuerstange (78) einstellbar ist,
**dadurch gekennzeichnet, dass**
die Drahtleitstücke (66, 68) in Steuerschlitze (84, 86) von Steuerkulissen (80, 82) eingreifende Steuernocken (88, 90) aufweisen und die Steuerkulissen (80, 82) an der Steuerstange (78) angeordnet sind.

2. Vorrichtung nach Anspruch 1, **dadurch gekennzeichnet, dass** der gegenseitige Abstand (a) der Drahtleitstücke (66, 68) in Abhängigkeit von der Anzahl Wicklungen oder Wickellagen über die Steuerstange (78) programmgesteuert einstellbar ist.

3. Vorrichtung nach Anspruch 1 oder 2, **dadurch gekennzeichnet, dass** die Drahtleitstücke (66, 68) zur Einstellung des gegenseitigen Abstandes (a) senkrecht zur Drehachse (y) des Wickelarmes (30) an einem Führungselement (76) gleitend verschiebbar sind.

4. Vorrichtung nach einem der Ansprüche 1 bis 3, **dadurch gekennzeichnet, dass** in der Rotationsachse (x) des Stators (14) ein Schaltapparat (10) zur Ausführung einer Drehbewegung des Stators (14) in die gewünschte Wickelposition angeordnet ist.

5. Vorrichtung nach einem der Ansprüche 1 bis 4 zum Bewickeln eines Stators für einen Aussenläufermotor.

## Claims

1. Device for winding wire (28) to form field coils around pole horns (18) of a multipole rotationally symmetrical stator (14) of an electric machine, the pole horns (18), which protrude radially outwards and are approximately T-shaped, delimiting axial slots (20) having opening slits (24) for the purpose of inserting the wire (28) into the axial slots (20), having a winding arm (30) which can rotate about an axis of rotation (y), which is perpendicular to the rotation axis (x) of the stator (14), for the purpose of winding the wire (28) around in each case one pole horn (18), and having wire conducting elements (52, 54, 56) in the form of insertion aids for the wire (28) into the opening slits (24) adjacent to the pole horn (18) to be wound, two mutually opposing wire conducting pieces (66, 68), which can engage around the pole horn (18) to be wound on both sides and can be moved to and fro, together with the winding arm (30), in the direction of the axis of rotation (y), being arranged for the purpose of distributing the wire (28) uniformly over the length of the pole horn (18), and it being possible for the mutual spacing (a) between the wire conducting pieces (66, 68) to be adjusted so as to match the thickness of the winding, which varies during the winding process, via a control rod (78) which can be moved to and fro on the axis of rotation (y), **characterized in that** the wire conducting pieces (66, 68) have control cams (88, 90) engaging in control slits (84, 86) in control guides (80, 82), and the control guides (80, 82) are arranged on the control rod (78).

2. Device according to Claim 1, **characterized in that** the mutual spacing (a) between the wire conducting pieces (66, 68) can be adjusted in a program-controlled fashion via the control rod (78) as a function of the number of windings or winding layers.

3. Device according to Claim 1 or 2, **characterized in that** the wire conducting pieces (66, 68) can be moved in a sliding manner on a guidance element (76), perpendicularly with respect to the axis of rotation (y) of the winding arm (30), for the purpose of adjusting the mutual spacing (a).

4. Device according to one of Claims 1 to 3, **characterized in that** a switching apparatus (10) is arranged on the rotation axis (x) of the stator (14) for the purpose of carrying out a rotary movement of the stator (14) to the desired winding position.

5. Device according to one of Claims 1 to 4 for the purpose of winding a stator for an external-rotor motor.

## Revendications

1. Dispositif pour bobiner un fil (28) en bobines inductrices autour des cornes polaires (18) d'un stator (14) multipolaire à symétrie rotationnelle d'une machine électrique, les cornes polaires (18) approximativement en forme de T et faisant saillie radialement vers l'extérieur délimitant des rainures axiales (20) munies de fentes d'ouverture (24) pour introduire le fil (28) dans les rainures axiales (20), comprenant un bras de bobinage (30) pouvant tourner autour d'un axe de rotation (y) perpendiculaire à l'axe de rotation (x) du stator (14) pour bobiner le fil (28) à chaque fois autour d'une corne polaire (18), et comprenant des éléments de guidage du fil (52, 54, 56) faisant office d'aides à l'introduction pour le fil (28) dans les fentes d'ouverture (24) voisines de la corne polaire (18) à bobiner, deux pièces de guidage du fil (66, 68) opposées l'une à l'autre, pouvant recouvrir des deux côtés la corne polaire (18) à bobiner et pouvant coulisser dans un sens et dans l'autre en même temps que le bras de bobinage (30) en direction de l'axe de rotation (y) étant disposées pour répartir régulièrement le fil (28) sur la longueur de la corne polaire (18) et l'écart mutuel (a) entre les pièces de guidage du fil (66, 68) étant réglable par le biais d'une tige de commande (78) pouvant se déplacer dans un sens et dans l'autre dans l'axe de rotation (y) pour l'adaptation à l'épaisseur du bobinage qui varie pendant l'opération de bobinage,
**caractérisé en ce que**
les pièces de guidage du fil (66, 68) présentent des cames de commande (88, 90) qui pénètrent dans des fentes de commande (84, 86) de coulisses de commande (80, 82) et les coulisses de commande (80, 82) sont disposées sur la tige de commande (78).

2. Dispositif selon la revendication 1, **caractérisé en ce que** l'écart mutuel (a) entre les pièces de guidage du fil (66, 68) peut être réglé sous la commande d'un programme par le biais de la tige de réglage (78) en fonction du nombre de bobines ou de couches de bobinage.

3. Dispositif selon la revendication 1 ou 2, **caractérisé en ce que** les pièces de guidage du fil (66, 68) peuvent coulisser en glissant sur un élément de guidage (76) perpendiculairement à l'axe de rotation (y) du bras de bobinage (30) pour régler l'écart mutuel (a) .

4. Dispositif selon l'une des revendications 1 à 3, **caractérisé en ce qu'**un appareil de commutation (10) destiné à réaliser un mouvement rotatif du stator (14) dans la position de bobinage souhaitée est disposé dans l'axe de rotation (x) du stator (14).

5. Dispositif selon l'une des revendications 1 à 4 pour bobiner un stator pour un moteur à induit extérieur.
